Europäisches Patentamt

European Patent Office

Office européen des brevets

(11) Veröffentlichungsnummer: **0 522 626 A2**

# (12) EUROPÄISCHE PATENTANMELDUNG

(21) Anmeldenummer: **92201874.2**

(22) Anmeldetag: **25.06.92**

(51) Int. Cl.5: **H04L 12/40**, H04L 12/28

(30) Priorität: **01.07.91 DE 4121719**

(43) Veröffentlichungstag der Anmeldung:
**13.01.93 Patentblatt 93/02**

(84) Benannte Vertragsstaaten:
**DE FR GB IT SE**

(71) Anmelder: **Philips Patentverwaltung GmbH**
**Wendenstrasse 35 Postfach 10 51 49**
**W-2000 Hamburg 1(DE)**
(84) **DE**

(71) Anmelder: **N.V. Philips' Gloeilampenfabrieken**
**Groenewoudseweg 1**
**NL-5621 BA Eindhoven(NL)**
(84) **FR GB IT SE**

(72) Erfinder: **Riegel, Maximilian**
**c/o Philips Patentverwalt. GmbH,**
**Wendenstrasse 35**
**W-2000 Hamburg 1(DE)**
Erfinder: **Nisslbeck, Wolfgang**
**c/o Philips Patentverwalt. GmbH,**
**Wendenstrasse 35**
**W-2000 Hamburg 1(DE)**

(74) Vertreter: **Volmer, Georg et al**
**Philips Patentverwaltung GmbH**
**Wendenstrasse 35, Postfach 10 51 49**
**W-2000 Hamburg 1(DE)**

(54) **Örtlich vernetztes System von Datenendgeräten.**

(57) Es wird ein örtlich vernetztes System von Datenendgeräten (2, 3, 4) mit einer bidirektionalen Sammelleitung (1) beschrieben. An diese Sammelleitung (1) sind die getakteten Datenendgeräte (2, 3, 4) zum Senden oder Empfangen von Daten angeschlossen. Damit bei einem solchen System die Datenübertragung asynchron erfolgen kann, besteht die Sammelleitung (1) aus n Adern. Mindestens einem Datenendgerät (2, 3, 4) ist ein Kodierer (2A, 3A, 4A) zugeordnet, der n-stellige Kodeworte parallel auf die n-adrige Sammelleitung (1) gibt und vom zugeordneten Datenendgerät auszusendende Daten und Steuerinformationen mit dessen Sendetakt in Übergänge von einem Kodewort in ein anderes Kodewort kodiert. Weiterhin ist mindestens einem Datenendgerät (2, 3, 4) ein Dekoder (2B, 3B, 4B) zugeordnet, der Übergänge von einem Kodewort zu einem anderen Kodewort auf der Sammelleitung (1) in Daten oder Steuerinformationen für das zugeordnete Datenendgerät (2, 3, 4) dekodiert.

FIG.3

Die Erfindung betrifft ein örtlich vernetztes System von Datenendgeräten mit einer bidirektionalen Sammelleitung, an die getaktete Datenendgeräte zum Senden oder Empfangen von Daten angeschlossen sind.

Örtlich vernetzte Systeme von Datenendgeräten mit den angegebenen Eigenschaften sind z.B. aus den US-Patentschriften 4 661 902 und 4 689 786 bekannt.

Mit dem Wort "örtlich" wird angedeutet, daß die miteinander vernetzten Datenendgeräte keine großen Entfernungen voneinander haben. Sie stehen z.B. alle in einem Raum oder sind in unterschiedlichen Räumen des gleichen Gebäudes untergebracht oder befinden sich in unterschiedlichen Gebäuden des gleichen Gebäudekomplexes.

Zu den Datenendgeräten können Computer aller Art, Multiplexgeräte oder Datensichtgeräte gehören.

Bei den Systemen, die aus den US-Patentschriften bekannt sind, ist für jedes Datenendgerät eine Schnittstelle vorgesehen, über die das Datenendgerät mit der Sammelleitung verbunden ist. Die Sammelleitung kann als Koaxialkabel, verdrillte Doppelleitung oder als Glasfaserleitung ausgebildet sein (vgl. hierzu den EIA Standard RS 485). Durch die Schnittstellen werden die Daten, die über die Sammelleitung laufen, an einen vorgegebenen Takt gebunden. Zur Wiedererkennung der einzelnen Bits einer übertragenen Nachricht sind in der Schnittstelle des Empfängers Mittel vorgesehen, mit denen ein Taktgenerator auf den Taktgenerator des Senders synchronisiert wird. Zur einfacheren Synchronisierung wird als Übertragungskode der FM-Null-Kode verwendet. Bei diesem Kode werden zur physikalischen Darstellung der Binärwerte (Signalelemente) positive und negative Spannungen verwendet. Die dabei auftretenden Nulldurchgänge dienen als Zeitmarken für die Taktrückgewinnung und die Synchronisation.

Der Erfindung liegt die Aufgabe zugrunde, ein vernetztes System der eingangs genannten Art anzugeben, bei dem die Datenübertragung über die Sammelleitung asynchron erfolgen kann.

Diese Aufgabe wird durch folgende Merkmale gelöst: Die Sammelleitung besteht aus n Adern für den Datenaustausch,
mindestens einem Datenendgerät ist ein Kodierer zugeordnet, der n-stellige Kodeworte parallel auf die n-adrige Sammelleitung gibt und vom zugeordneten Datenendgerät auszusendende Daten und Steuerinformationen mit dessen Sendetakt in Übergänge von einem Kodewort in ein anderes Kodewort kodiert,
mindestens einem Datenendgerät ist ein Dekoder mit einem Empfangspuffer zugeordnet, der Übergänge von einem Kodewort zu einem anderen Kodewort auf der Sammelleitung in Daten oder Steuerinformationen für das zugeordnete Datenendgerät dekodiert und in dem Empfangspuffer einschreibt.

Das durch die vorstehend aufgezählten Merkmale umrissene System erweist sich hinsichtlich der elektromagnetischen Abstrahlung günstiger als vergleichbare Systeme mit nur einer Ader als Sammelleitung. Der eigentliche Grund hierfür ist der, daß die abgestrahlte Energie einer Leitung dem Quadrat der Frequenz des Leitungsstromes proportional ist und daß die Zustandsänderungen auf einer Ader der n-adrigen Sammelleitung nur 1/n mal so häufig auftreten wie unter sonst gleichen Bedingungen auf einer einadrigen Sammelleitung. Hieraus folgt, daß bei n Adern die Abstrahlung nur noch ein n-tel der Abstrahlung beträgt, die bei einer Ader vorliegen würde.

Eine asynchrone Übertragung von Daten über die n-adrige Sammelleitung ist deshalb möglich, weil zur Erkennung von Kodewortübergängen kein Takt erforderlich ist, wie z.B. der Dekoder nach Anspruch 2 zeigt. Jeder Sender kann daherÜbergänge von einem Kodewort zu einem anderen Kodewort mit seinem eigenen Sendetakt erzeugen, wobei die Sendetakte der angeschlossenen Datenendgeräte unterschiedlicheFrequenzen haben dürfen. Die dekodierten Kodewortübergänge werden in einen ohnehin vorhandenen Empfangspuffer eingeschrieben und aus ihm mit dem Empfangstakt des betreffenden Datenendgerätes wieder ausgelesen.

Weitere Ausgestaltungen für Koder und Dekoder sind in den Unteransprüchen angegeben.

Anhand der Figuren und anhand von Ausführungsbeispielen soll die Erfindung nun näher erläutert werden.

Es zeigen
Fig. 1 ein Prinzipschaltbild einer erfindungsgemäßen Anordnung,
Fig. 2 und Fig. 3 je einen Dekoder und
Fig. 4 einen Kodierer für eine erfindungsgemäße Anordnung und
Fig. 5 sowie Fig. 6 Kodiertabellen.

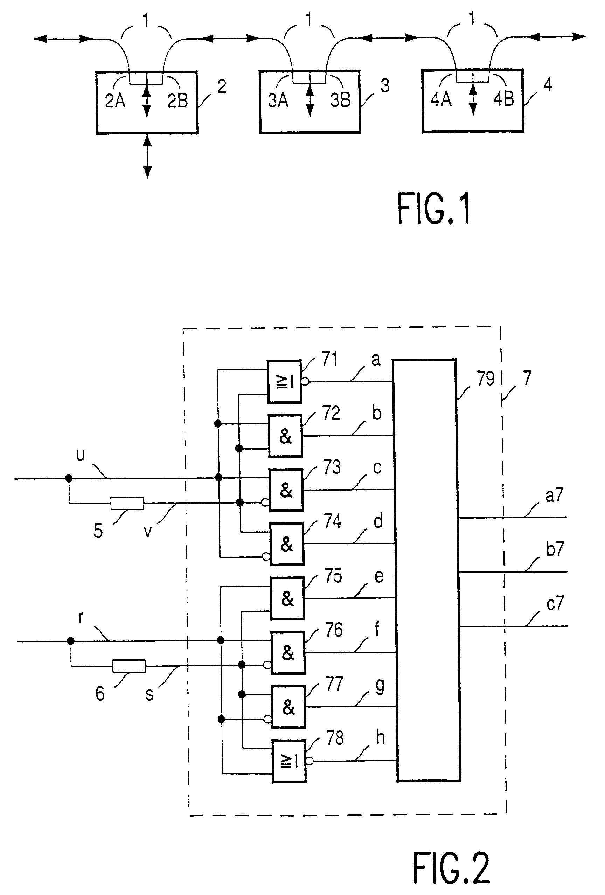

In den beschriebenen Ausführungsbeispielen wird davon ausgegangen, daß es sich um eine zweiadrige Sammelleitung handelt. Diese Sammelleitung hat in Fig. 1 das Bezugszeichen 1. Mit ihr sind drei Datenendgeräte verbunden, nämlich ein Multiplexer 2, ein Kodek 3 und ein Personalcomputer (PC) 4. Im folgenden werden der Kürze wegen für Leitungen oder Adern, für die Signale auf diesen Leitungen oder Adern, sowie für die binären Variablen dieser Signale die gleichen Zeichen und Bezugszeichen verwendet. Die Geräte 1, 2 und 3 verfügen über Kodierer 2A, 3A und 4A, sowie über Dekoder mit jeweils einem Empfangspuffer (2B, 3B, 4B).

Fig. 2 zeigt einen Dekoder 7 für den Fall einer aus zwei Adern bestehenden Sammelleitung. Der Dekoder 7 benötigt kein Taktsignal. Eingangssignale u und r auf den beiden Adern durchlaufen jeweils ein Verzögerungsglied 5 bzw. 6; es verzögert die Flanken der binären Eingangssignale u und r. Die verzögerten Signale sind mit v und s bezeichnet. Die Verzögerungszeiten müssen so eingestellt werden, daß sie kleiner sind als die Bitdauer aller der auf den Adern u und r ankommenden binären Signale. Die verzögerten und die unverzögerten Signale werden dem Dekoder 7 zugeführt, der aus acht Eingangsgattern 71 bis 78 und einer Dekodierlogik 79 besteht.

Jedem der vier Eingangsgatter 71 bis 74 werden die Signale u und v und jedem der vier Eingangsgatter 75 bis 78 die Signale r und s zugeführt. Bei den Eingangsgattern 72 bis 77 handelt es sich um UND-Gatter, von denen die Gatter 73, 74, 76 und 77 einen invertierenden Eingang haben. Auf den invertierenden Eingang des Gatters 73 ist das verzögerte Signal v und auf den invertierenden Eingang des Gatters 76 das verzögerte Signal s geleitet. An die invertierenden Eingänge der Gatter 74 bzw. 77 ist das unverzögerte Signal u bzw. r geführt. Die Gatter 71 und 78 sind NOR-Gatter.

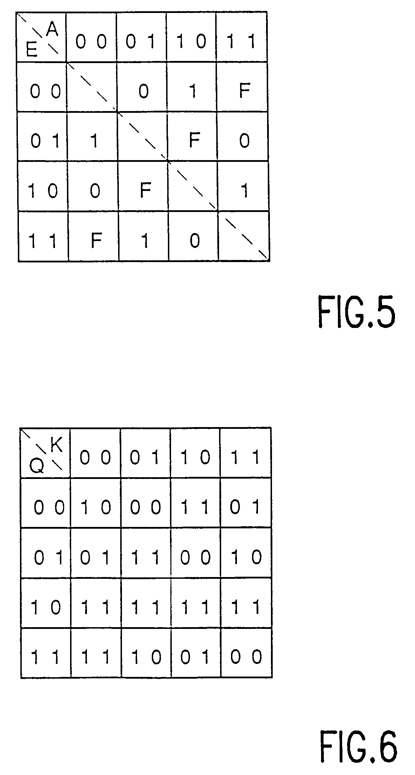

Der Ausbau der Dekodierlogik 79 hängt davon ab, welche Be deutung die Kodewortübergänge auf den Adern u und r haben, d.h., von dem verwendeten Kode. Der im Ausführungsbeispiel verwendete Kode ist in der Tabelle der Fig. 5 angegeben. In der obersten Zeile A dieser Tabelle sind vier zweistellige Kodeworte eingetragen, von denen jedes ein Anfangskodewort sein kann. Diese Kodeworte sind die möglichen Werte des Variablenpaares (u, r). Gleiches gilt für die in der linken Spalte E angegebenen Kodeworte, von denen jedes ein Endkodewort sein kann. Die Bedeutung eines Übergangs von einem Anfangskodewort zu einem Endkodewort ist in den restlichen zwölf Feldern der Tabelle eingetragen. Jedes einzelne Feld ist durch das zugehörige Anfangskodewort und das zugehörige Endkodewort festgelegt. So bedeutet z.B. der Übergang vom Kodewort (0, 0) zum Kodewort (0, 1) eine binäre 1, der Übergang vom Kodewort (0, 0) zum Kodewort (1, 0) eine binäre 0 und der Übergang vom Kodewort (0, 0) zum Kodewort (1, 1) ein Steuerzeichen F (Flag).

Andere Kodes sind möglich, sofern nur jede Spalte der aus den Feldern bestehenden Matrix die drei Zeichen 0,1 und F enthält.

Bei der Bedeutung der Übergänge, die durch die Tabelle der Fig. 5 festgelegt ist, sind die binären Variablen der Ausgangssignale $a_7$ bis $c_7$ der Dekodierlogik 79 durch folgende logische Gleichungen mit den binären Variablen der Eingangssignale a bis h verknüpft:

$$a_7 = (c+d)(f+g) \qquad (1)$$

$$b_7 = fb + ga + de + ch \qquad (2)$$

$$c_7 = fa + gb + dh + ce \qquad (3).$$

In den angegebenen Gleichungen bedeutet die Addition die logische Disjunktion (Inklusiv-Oder) und die Multiplikation die logische Konjunktion der logischen Variablen a bis h.

Ergibt sich die logische Variable $a_7$ zu logisch 1, so hat das die Bedeutung des Zeichens F nach Fig. 5. Geht die Variable $b_7$ auf logisch 1, hat das die Bedeutung einer binären 1 und geht die Variable $c_7$ auf logisch 1, so hat das die Bedeutung einer binären 0. Nehmen die drei Variablen ($a_7$, $b_7$, $c_7$) den Wert 0 an, liegt ein Ruhesignal vor.

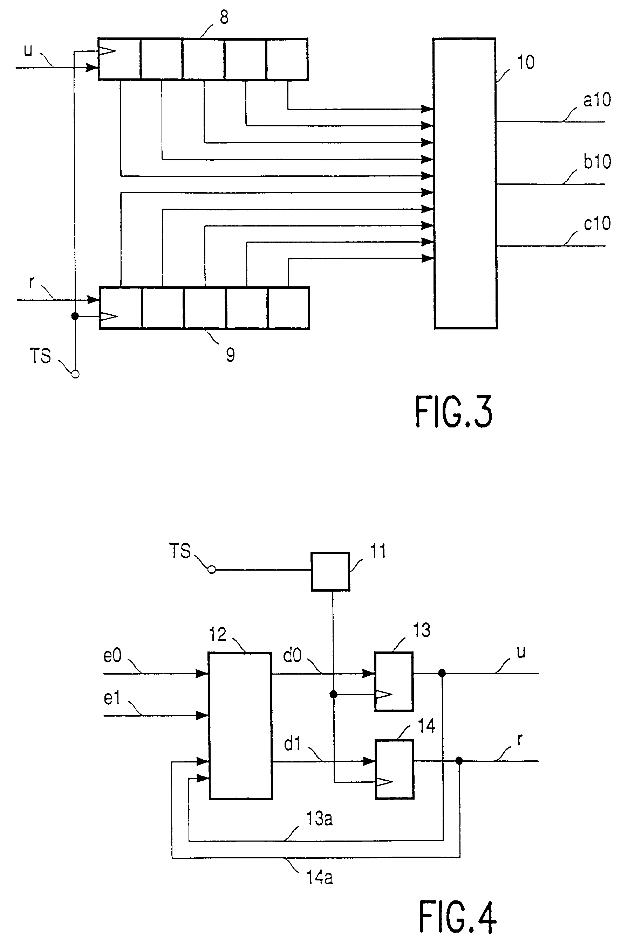

Fig. 3 zeigt eine taktgebundene Variante eines Dekoders für ein System der eingangs genannten Art. Die Signale auf den Adern u und v werden mit einem Takt TS abgetastet und diese Abtastwerte werden jeweils durch ein fünfstufiges Schieberegister 8 bzw. 9 geschoben. Die Frequenz des Abtasttaktes bzw. Schiebetaktes TS muß so groß sein, daß ein Kodewortwechsel auf den Adern u und r nicht übersehen werden kann. Als Schiebetakt kann nur dann der Systemtakt des angeschlossenen Datenendgerätes verwendet werden, wenn seine Frequenz doppelt so groß ist wie die größte Sendetaktfrequenz aller anderen, an die Sammelleitung angeschlossenen Datenendgeräte.

Die Ausgänge der Stufen der beiden Schieberegister 8 und 9 sind mit Adreßeingängen eines ROM's 10 verbunden. Das ROM 10 ist so programmiert, daß es bei Übergängen von einem Kodewort zu einem anderen - also beim Auftreten von Flanken bzw. unterschiedlichen Folgen von Binärwerten in den Schieberegistern 8 und 9 - einen Impuls auf einer der Leitungen $a_{10}$, $b_{10}$ oder $c_{10}$ abgibt.

Ein Impuls auf der Leitung $a_{10}$ hat die Bedeutung des Zeichens F, ein Impuls auf der Leitung $b_{10}$ hat die Bedeutung einer binären 1 und ein Impuls auf der Leitung $c_{10}$ die Bedeutung einer binären 0, entsprechend der Tabelle nach Fig. 5.

Fig. 4 zeigt einen Kodierer für das eingangs genannte System. Der Kodierer nach Fig. 4 wird über Leitungen $e_0$ und $e_1$ von einem binären Quellkoder gespeist. Nimmt die Kombination ($e_0$, $e_1$) der Binärwerte auf den Leitungen $e_0$ und $e_1$ den Zustand (0, 0) an, so bedeutet das eine Datennull. Der Zustand (0, 1) bedeutet eine Dateneins, während der Zustand (1, 0) ein Ruhesymbol und der Zustand (1, 1) das schon erwähnte Zeichen F bedeuten.

Durch einen Baustein 12, Flip-Flops 13 und 14, deren Q-Ausgänge über Leitungen $13a$ und $14a$ auf zwei Eingänge des Bausteins 12 rückgekoppelt sind, wird der Quellenkode in Kodewortübergänge auf den Adern u und r umkodiert. Die beiden Ausgänge $d_0$ und $d_1$ des Bausteins 12 sind an die Dateneingänge der Flip-Flops 13 und 14 geführt.

Getaktet werden die Flip-Flops 13 und 14 mit einem im Verhältnis 1:2 durch einen Teiler 11 untersetzten Sendetakt TS. An diesen Sendetakt TS sind die Quelldaten e0 und e1 gebunden.

Beim Baustein 12 handelt es sich um ein PROM, das entsprechend der in Fig. 6 abgebildeten Tabelle zu programmieren ist. Diese Tabelle zeigt in der obersten Zeile K die auf den Adern u und r anliegenden Kodeworte als Werte des binären variablen Paares (u, r). Die am weitesten links stehende Spalte Q gibt die Quelldaten als Werte der Variablenpaare (e0, e1) an. Jede Kombination der Kodeworte (u, r) und der Paare (e0, e1) kann an den vier Eingängen des PROM's 12 anliegen. Welche Werte das variable Paar (d0, d1) annehmen soll, ist den weiteren Feldern der Tabelle in Fig. 6 zu entnehmen, und zwar stehen die zugehörigen Werte in demjenigen Feld, in dem sich die Waagerechte und die Senkrechte schneiden, die durch einen bestimmten der Werte (e0, e1) bzw. (u, r) gezogen werden.

Hat z.B. (u, r) den Wert (0, 0) und (e0, e1) auch den Wert (0, 0), so muß (d0, d1) den Wert (1, 0) annehmen.

Da die Werte (d0, d1) an den Dateneingängen der Flip-Flops 13 und 14 anliegen, werden sie mit dem nächsten Taktimpuls an deren Q-Ausgänge übernommen und stellen dann die aktuellen Kodeworte (u, r) am Ausgang des Kodierers dar.

Als Kodierer kann z.B. auch der entsprechend programmierte handelsübliche Baustein PAL 15 R8 von AMD verwendet werden.

**Patentansprüche**

1. Örtlich vernetztes System von Datenendgeräten (2, 3, 4)
   - mit einer bidirektionalen Sammelleitung (1), an die getaktete Datenendgeräte (2, 3, 4) zum Senden oder Empfangen von Daten angeschlossen sind, gekennzeichnet durch folgende Merkmale:
   - die Sammelleitung (1) besteht aus n Adern für den Datenaustausch,
   - mindestens einem Datenendgerät (2, 3, 4) ist ein Kodierer (2A, 3A, 4A) zugeordnet, der n-stellige Kodeworte parallel auf die n-adrige Sammelleitung gibt und vom zugeordneten Datenendgerät auszusendende Daten und Steuerinformationen mit dessen Sendetakt in Übergänge von einem Kodewort in ein anderes Kodewort codiert,
   - mindestens einem Datenendgerät (2, 3, 4) ist ein Dekoder mit einem Empfangspuffer (2B, 3B, 4B) zugeordnet, der Übergänge von einem Kodewort zu einem anderen Kodewort auf der Sammelleitung (1) in Daten oder Steuerinformationen für das zugeordnete Datenendgerät (2, 3, 4) dekodiert und in dem Empfangspuffer (2B, 3B, 4B) einschreibt.

2. Dekoder für ein System nach Anspruch 1, dadurch gekennzeichnet, daß die Signale der n Adern (u, r) sowohl direkt als auch verzögert (5, 6) einem nachgeschalteten Logik-Baustein (7) mit 2n Eingängen zugeführt werden, der die Eingangsdaten entsprechend einem vorbestimmten Kode in Ausgangsdaten (a7, b7, c7) transformiert.

3. Dekoder für ein System nach Anspruch 1, dadurch gekennzeichnet, daß die Signale auf den n Adern (u, r) der Sammelleitung (1) mit dem Systemtakt (TS) des Datenendgerätes jeweils durch ein Schieberegister (8, 9) geschoben werden und daß die Stufen der Schieberegister (8, 9) mit den Eingängen eines zweiten Logik-Bausteins (10) verbunden sind, der die Eingangsdaten nach einem vorbestimmten Kode in Ausgangsdaten (a10, b10, c10) transformiert.

4. Kodierer für ein System nach Anspruch 1, dadurch gekennzeichnet, daß er einen programmierbaren Baustein (12, 13, 14) enthält, der mit dem Sendetakt des Datenendgerätes die Sendedaten (e1, e0) nach einem vorbestimmten Kode in die n-stelligen Kodeworte umsetzt.

5. Kodierer nach Anspruch 4, dadurch gekennzeichnet, daß er Mittel (12, 13, 14) enthält, mit denen im Falle einer zweiadrigen Sammelleitung ein Drittel aller Kodewortübergänge zur Kodierung einer binären 1, ein zweites Drittel aller Kodewortübergänge zur Kodierung einer binären 0 und ein weiteres Drittel zur Kodierung eines Steuerbits (Flag) verwendet wird (Fig. 5).

FIG.1

FIG.2

FIG.3

FIG.4

6

| E \ A | 0 0 | 0 1 | 1 0 | 1 1 |
|---|---|---|---|---|
| 0 0 | | 0 | 1 | F |
| 0 1 | 1 | | F | 0 |
| 1 0 | 0 | F | | 1 |
| 1 1 | F | 1 | 0 | |

FIG.5

| Q \ K | 0 0 | 0 1 | 1 0 | 1 1 |
|---|---|---|---|---|
| 0 0 | 1 0 | 0 0 | 1 1 | 0 1 |
| 0 1 | 0 1 | 1 1 | 0 0 | 1 0 |
| 1 0 | 1 1 | 1 1 | 1 1 | 1 1 |
| 1 1 | 1 1 | 1 0 | 0 1 | 0 0 |

FIG.6